# EUROPEAN PATENT APPLICATION

(11) **EP 4 700 683 A1**
(43) Date of publication of application: **25.02.2026**
(21) Application number: 24195461.9
(22) Date of filing: 20.08.2024
(51) Int. Cl.: G06Q 20/32, G06Q 20/40

(54) **TRANSACTION AUTHENTICATION**

(71) Applicant: Mastercard International Incorporated, Purchase, NY 10577 (US)
(72) Inventor: HEMMINGS, Gary, Flintshire, CH5 3TT (GB); MUSHING, Alan, Cheshire, CW9 6PX (GB)
(74) Representative: Keltie LLP

(57) **Abstract**

A method for processing a transaction interaction between a first device and a payment processing device. The method is implemented by a remote server and comprises receiving a transaction request associated with a payment account of a user and generated during the transaction interaction, and receiving user state information from at least one second device associated with the user. The method further comprises determining a state of the user based on the user state information, and determining whether the state of the user satisfies a confidence criterion. In dependence on the state of the user failing to satisfy the confidence criterion, the method then requests authentication information from the user in order to determine whether to approve the transaction request.

## Description

### Field of Disclosure

The present disclosure relates generally to the authentication of interactions, and more specifically, but not exclusively, to methods and system for the authentication of a user during payment transactions.

### Background of Disclosure

As payment and authentication solutions grow and continue to develop, there is still a need for the surrounding transaction processing system to provide more assurance around a payment being authentic.

Current implemented systems typically perform standard device and environment checks regarding transaction requests originated both online and in-store. When a payment transaction is initiated, systems are set up to verify that the account holder is the one who requested the payment, by validating the account holder with mechanisms such as: verifying the payment card or token used, verifying the PIN or password provided, or confirming the identity of the user through fingerprint scanning or face recognition.

However, even with the security checks that are currently in place, with the constant development of more sophisticated fraud mechanisms, it would be desirable to expand the security checks performed by the current systems before approving a transaction.

### Summary of Disclosure

The present inventors have appreciated that devices linked to a user that initiated a transaction request, can provide additional information that can be used to determine a condition or location of the user at the time the transaction was initiated, and based on that condition or location ascertaining whether the transaction request is legitimate or if additional security checks should be performed before approving the transaction.

Therefore, according to a first aspect, the disclosure provides a computer implemented method for processing a transaction interaction between a first device and a payment processing device, the method being implemented by a remote server and comprising: receiving a transaction request associated with a payment account of a user and generated during the transaction interaction; receiving user state information from at least one second device associated with the user; determining a state of the user based on the user state information; determining whether the state of the user satisfies a confidence criterion; and requesting, in dependence on the state of the user failing to satisfy the confidence criterion, authentication information from the user in order to determine whether to approve the transaction request.

Determining whether the state of the user satisfies a confidence criterion involves establishing a level of confidence that the user could have carried out the transaction interaction, whereby the state of the user failing to satisfy the confidence criterion is indicative that there is a low level of confidence that the user could have carried out the transaction interaction, such that additional authentication checks of the user should be performed prior to approving the transaction request. In some instances, the first device and the second device may be the same device; in some instances, they may be different devices.

This approach has clear benefits in relation to improving security in the approval of transaction requests. Firstly, user state information may be obtained from devices that were not used to initiate the transaction request, such that the user state information is not directly associated with the transaction request and therefore provides an independent cross-check mechanism and hence adds an additional level of security to the transaction approval process. Secondly, the determination of the state of the user allows the system to estimate whether the user is in a state that would prevent them from starting the transaction request. Therefore, the state of the user serves to complement / enhance the validity of validation information requested to positively verify the account holder upon initiation of the transaction request (e.g., verification of the payment card or token used, the PIN or password provided, or confirming the identity of the user through fingerprint scanning or face recognition).

Optionally, in some instances, the confidence criterion is indicative of the user being in a location and/or condition, such that there is a sufficiently high likelihood of the user being involved in the transaction interaction. This beneficially allows for determining whether a transaction request is legitimate, based on a determined condition or location of the user. As a result, if the user state fails to satisfy the confidence criterion, this means that the likelihood of the user being involved in the transaction interaction is not sufficiently high for the server to approve the transaction request without requiring (additional) authentication information from the user.

In some implementations, the user state information comprises one or more of the following: a geographical location of the at least one second device, network connection information of the at least one second device, data related to user interaction with the at least one second device. Alternatively, the user state information comprises a location of a network connection for the at least one second device, and wherein the state of the user corresponds to an estimated location of the user for the at least one second device. This beneficially allows for the determination, with a degree of certainty and potentially via an independent second device, of whether the user is at a location that is compatible with the location of where the transaction is taking place.

In some cases, optionally, the transaction request comprises a location associated with the transaction request, and wherein the confidence criterion comprises a threshold value of a distance between the location associated with the transaction request and the estimated location of the user. This means that in such cases the estimated location of the user must be within a specified distance from the location where the transaction is taking place, such that it would be feasible for the user to have initiated the transaction. The estimated location can be associated with second device information indicating that the user has interacted with the (second) device, or second device information indicating that the user has been in transit and where, approximately, the user can reasonably be expected to be, taking into account parameters such as transit time. As such, the criterion assessment used in some instances of the disclosure comprises a maximum distance acceptable between the estimated location of the user and the location in which the transaction is taking place.

In some instances, requesting the authentication information comprises requesting the user to provide additional data associated with at least one of the payment account and the user. This results in a step-up in the security process for approval of the transaction request, improving the security of the transaction.

Optionally, the at least one second device comprises one or more of the following: a mobile phone, a car, a handheld device, a controller, or a voice-activated device. This includes essentially any device with network connection capability, including, but not limited to smart watches, smart thermostats, voice activated devices (e.g., Alexa^{™}, Google dot^{™}), smart intercom systems, and media system in cars.

In some implementations, the method further comprises a machine learning module, wherein the machine learning module is configured to implement a method comprising: analysing the user state information associated with the transaction request and previous user state information associated with previous transaction requests; estimating a user behaviour based on the user state information and the previous user state information; sending user confirmation request based on the determined user behaviour satisfy the confidence criterion. This beneficially allows the method to incorporate a self-learning, feedback mechanism in order to estimate an expected user behaviour, based on previous user state information, and determine whether there is a need to step-up the security verification based on the expected user behaviour. This results in a more adaptable and flexible method that can adjust the security verification to the specific user.

In a second aspect, the disclosure provides a system for processing a transaction interaction between a first device and a payment processing device, the system comprising one or more processors collectively configured to: receive a transaction request associated with a payment account of a user and generated during the transaction interaction; receive user state information from at least one second device associated with the user; determine a state of the user based on the user state information; determine whether the state of the user satisfies a confidence criterion; and request, in dependence on the state of the user failing to satisfy the confidence criterion, authentication information from the user in order to determine whether to approve the transaction request.

As noted above, this approach has clear benefits in relation to improving security in the approval of transaction requests, since it enables the use of information that does not originate with the transaction request to determine whether to approve the transaction.

Corresponding features and associated benefits are associated with the system as were set out above in relation to the method.

In a third aspect, the disclosure provides a computer readable medium and a processor, the computer readable medium having a computer readable code embodied therein, the computer readable code being configured such that, when executed by the processor, it is adapted to implement the method of the first aspect.

In summary, the disclosure herein relates to methods and computer implemented systems to receive user information from at least one device associated with the user that provides user information that is used to determine whether additional authentication information is required from the user. The systems and methods herein can be used to determine whether a user associated with the transaction request is not at a different location from the one where the transaction is taken place, or is not in a condition that would prevent the user from initiating the transaction (e.g., driving a car).

### Brief Description of Figures

Embodiments of the disclosure will now be described, by way of example, with reference to the accompanying figures, of which:
Figure 1 shows a general approach adopted by elements of the disclosure in addressing technical problems associated with processing transaction interactions;
Figure 2 shows a general-purpose architecture for supporting transaction interactions between a cardholder / user entity and a merchant entity;
Figure 3 shows a workflow of a process used in the architecture of Figure 2 for approving the transaction interactions;
Figure 4 shows a schematic diagram including relevant parts of a representative transaction processing system suitable for implementing embodiments of the disclosure;
Figure 5 illustrates a general processing workflow for a method implemented by the system as illustrated in Figure 4; and
Figure 6 shows a flowchart illustrating specific details of a method performed according to embodiments of the disclosure.

### Description of Specific Embodiments

General and specific embodiments of the disclosure will be described below with reference to the figures.

As described in the summary section, the disclosure herein relates to determining from user information, obtained from one or more devices associated with the user, a state of a user that is used to determine whether to request additional authentication information from the user.

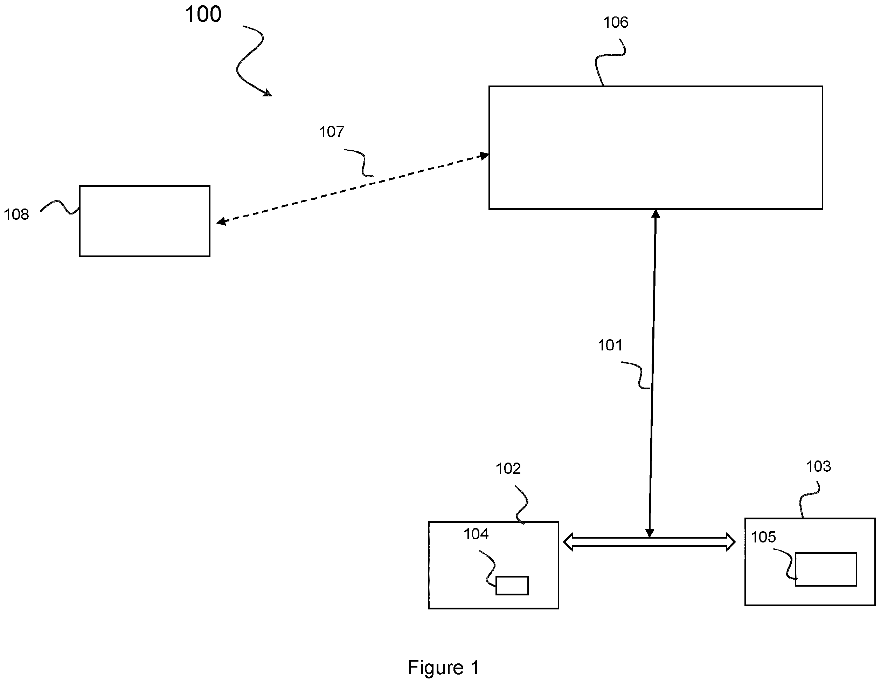

In general terms, the problem addressed by the disclosure and the solution employed by embodiments of the disclosure is illustrated in Figure 1.

A system 100 is provided in which a transaction request 101 is generated by means of a transaction interaction between a first user entity 102 and a second (merchant or transaction processing) entity 103 via interaction of first and second devices 104 and 105 associated with the two entities respectively. As part of the transaction interaction, transaction data is generated by the two devices and transmitted to a remote system or server 106 for authentication of the transaction, where the server 106 may be part of an issuer associated with the first device 104, or a third-party server with the appropriate trust relationships. The transaction request 101 comprises data associated with the user entity 102, including payment account information associated with the user 102 and provided by the first device 104, and data associated with the transaction and/or the second entity 103 (e.g., location information) and provided by the second device 103.

During the transaction interaction, the server 106 processes the information received as part of the transaction request 101 and performs some initial user authentication processing, including various device health and environment checks, prior to authentication of the transaction request 101. The device health and environment checks may correspond to services provided by backend services of the server 106 and may include backend services of one of more entities in the payment system (e.g., the issuer or a digital product vendors attestation backend). As the skilled person will be aware, a large variety of different device health and environment checks may be involved as part of typical / standard checks, for example 3-D secure standard checks and device attestation. The 3-D secure standard checks may cover a plurality of data elements, including but not limited to: cardholder account information (transactions per day, shipping information, age, etc.), cardholder account number, purchase date & time, SDK App ID, Merchant ID, country code etc. In addition, the device attestation is performed in a plurality of data points, including but not limited to source and data integrity, rooted device, emulator, hooking, timely reporting, file integrity protection, use of nonces, counters, timestamps, error codes, etc.

Returning to the transaction interaction, the server 106 also receives or requests additional user information 107 from one or more devices 108 that are associated with the user 102, but that do not interact with the second entity 103, and that are not part of the transaction interaction. Only one such device is shown for ease of understanding, but it will be appreciated that multiple devices may be provided and multiple different pieces of user information 107 may be received by the server 106. These additional pieces of user information 107 may be received by the server 106 via any conventional communication means.

The server 106 may therefore receive additional user information 107 that is independent from the transaction interaction. This user information 107is used by the server 106 to determine a state of the user 102 at the time of the transaction interaction. The state of the user may be associated with the location of the user 102, or with a condition of the user (e.g., in transit, driving, etc), at the time of the transaction interaction. The state of the user 102, as determined by the server 106 is then assessed against at least one predefined (confidence) criterion to indicate a level of confidence that the server 106 has regarding whether the user 102 could have initiated or been involved in the transaction interaction. The indicated confidence level therefore allows the server 106 to establish whether some (additional) authentication information must be requested from the user 102. More specifically, if the state of the user fails to satisfy the confidence criterion, this means that the server 106 has a low level of confidence that the user was involved in the transaction interaction (and therefore the transaction request may have been fraudulently made). However, if the state of the user satisfies the confidence criterion, then the server 106 will have sufficient confidence that the user was involved in the transaction interaction (and that the transaction request was validly made).

As an example, the confidence criterion may relate to a correlation of the state of the user 102 with the transaction interaction, and may involve for example, defining a threshold distance between an estimated location of the user 102 at the time when the transaction request was generated and the geographical location where the transaction interaction is taking place. In such an instance, assessing the confidence criterion would involve determining whether the actual distance is greater than the threshold distance, and if so, this would indicate to the server 106 that there is a low confidence level that the user would have initiated the transaction request, since it would be physically difficult for them to have done so. The confidence criterion is used by the server 106 to determine whether (additional) authentication information should be requested from the user 102 in order to approve the transaction request 101. The response enacted by the server 106 following the determination of whether the confidence criterion is satisfied may be a binary (yes / no) response, or a scale response, in which different levels of authentication information may be requested from the user 102.

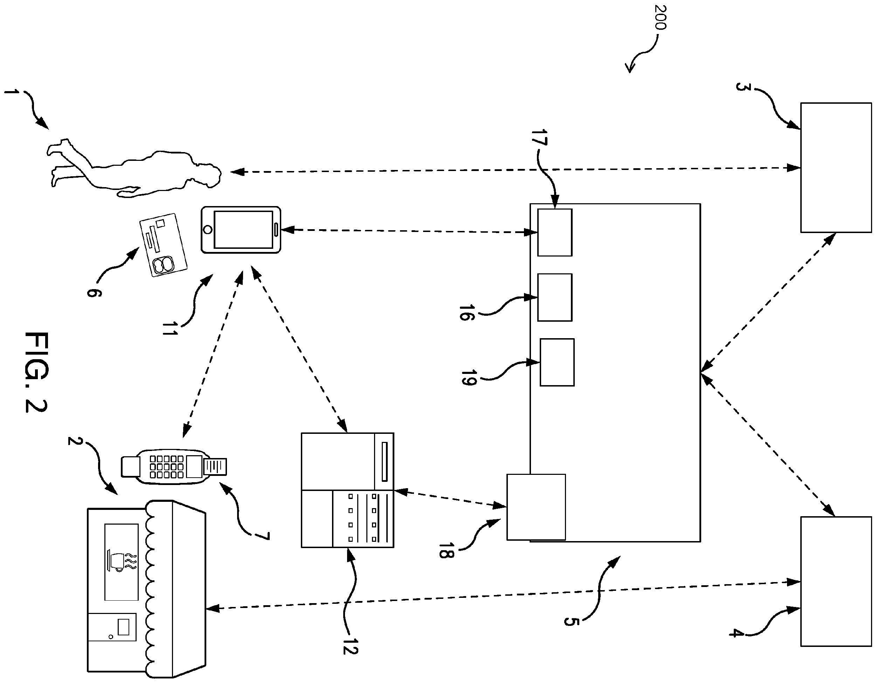

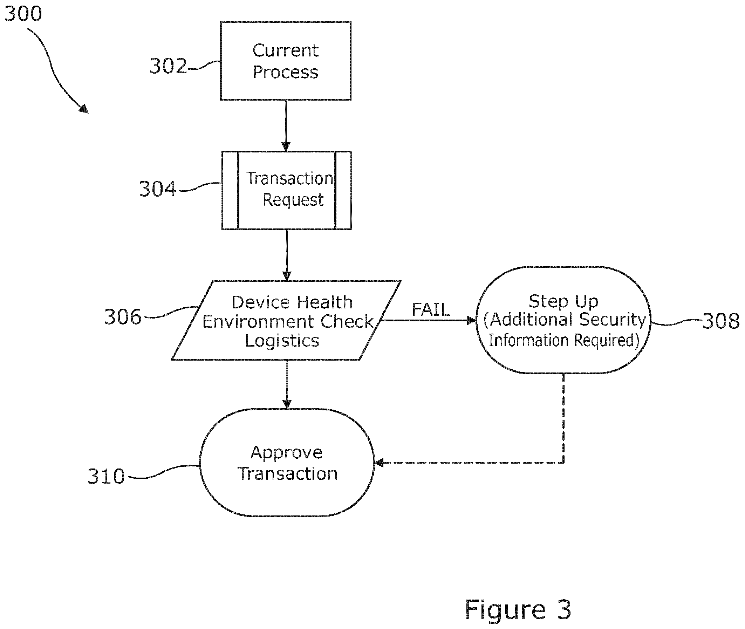

Some specific implementations will be described in more detail in the context of a transaction infrastructure, which will itself first be described in some detail in order to provide basis for understanding the processing improvements that are provided in this context. Figure 2 shows a general-purpose architecture for supporting transaction interactions between a cardholder / user entity and a merchant entity. Figure 3 shows a workflow of a process that would be used in the architecture of Figure 2 in relation to approving the transaction interactions.

For a conventional transaction, a cardholder 1 will use their payment card 6 - or a mobile computing device such as smartphone 11 adapted for use as a contactless payment device - to transact with a point of sales (POS) terminal 7 of a merchant. However, in other embodiments also relevant to the present disclosure, the cardholder will use his or her computing device - which may be any or all of a cellular telephone handset, a tablet, a laptop, a static personal computer or any other suitable computing device (here cellular telephone handset or smartphone 11 is shown) - and other computing devices such as a smart watch or other wearable device may also be used) - to act either as a proxy for a physical payment card 6 or as a virtual payment card operating only in a digital domain. The smartphone 11 may achieve this with a mobile payment application and a digital wallet, for example. The smart phone 11 can use these to transact with a merchant POS terminal 7 using near field communication (NFC) or another contactless technology, or to make a payment in association with its wallet service.

These devices typically have secure processors and memories for storing information including firmware and applications run by the respective processors. Payment cards 6 and payment card proxies will typically be equipped with means to communicate with other elements of a payment infrastructure. These communication means may comprise contacts on a payment card 6 to allow communication by protocols such as those defined under ISO/IEC 7816, they may comprise antennae and associated hardware and software to enable communication by NFC and associated contactless card protocols such as those defined under ISO/IEC 14443, or they may comprise an antenna and associated hardware and software to allow local wireless networking using 802.11 protocols, any combination of the above or any wireless communications protocol.

Additionally or alternatively, for a remote transaction, the smartphone 11 may also be able to interact with a merchant server 12 representing the merchant 2 over any appropriate network connection, such as the public internet - the connection to the merchant 2 may be provided by an app or application on the computing device.

The transaction scheme infrastructure (hereafter simply referred to as 'banking infrastructure') 5 here provides not only the computing infrastructure necessary to operate the card scheme and provide routing of transactions and other messaging to parties such as the acquirer 4 and the issuer 3, but also a wallet service / server 17 to support a digital wallet on the cardholder computing device; optionally, an internet gateway 18 is also provided to accept internet-based transactions for processing by the transaction infrastructure. This internet gateway 18 may be provided by a payment service provider, and in some arrangements the merchant 2 may interact with an internet gateway rather than directly with the acquirer. In other embodiments, the wallet service / server 17 may be provided similarly by a third-party with an appropriate trust relationship with the transaction scheme provider. To support tokenisation, a token service provider (TSP) 19 is present (again, this is shown as part of banking infrastructure 5 but may be provided by a third-party with appropriate trust relationships), and the banking infrastructure 5 provides a digital enablement service 16 to support the performance of tokenized digital transactions, and to interact with other elements of the system to allow transactions to be performed correctly - this digital enablement service may include other elements, such as token service provision.

Figure 3 shows a flowchart illustrating steps of a method 300 performed by an issuer 3 (or other appropriately trusted remote third party) when processing transaction interactions in the transaction architecture of Figure 2. Briefly, in a first step 302, a transaction process is initiated. Thereafter, the issuer 3 receives, in step 304, a transaction request from the merchant 2, via the acquirer 4 and using the banking infrastructure 5. Thereafter, the method 300 continues in step 306, in which the issuer 3 performs various user authentication and validation checks (also hereafter referred to as 'device health and environment checks'). In more detail, the issuer 3 performs checks to validate the account holder, and using tools provided by for example technical standards (e.g., 3D Secure, 3DS). These technical standards are security protocols in which, in order to complete an online transaction, the user is asked to provide proof of identity by entering a unique password, a short messaging service (SMS) code or a temporary PIN. Additionally or alternatively, the user may be required to provide identifying information associated with themselves (e.g., PIN / Password, biometric information). Based on the results of the checks performed in step 306 failing to fulfil predefined security requirements, the issuer 3 may issue, in step 308, a `step up' challenge to request additional validation information from the user, which may include requesting the user to provide an additional password, PIN or information associated with the user (i.e., the payment account) or the payment device 6, 11. Finally, the method 300 proceeds to step 310, whereby the transaction request is approved if the user validation checks performed in steps 306 and/or 308 (as appropriate) are passed.

As the number of e-commerce and identity fraud attacks increases, the present Applicant has appreciated that it would be advantageous to be able to expand the current systems security to close the gaps that enable fraud attacks. More specifically, they have developed a new approach to user authentication and validation which involves assessing the confidence level of whether the user associated with the transaction request could potentially not be the person initiating the request, based on a determination that the user is in a location and/or condition that is incompatible with initiating the request.

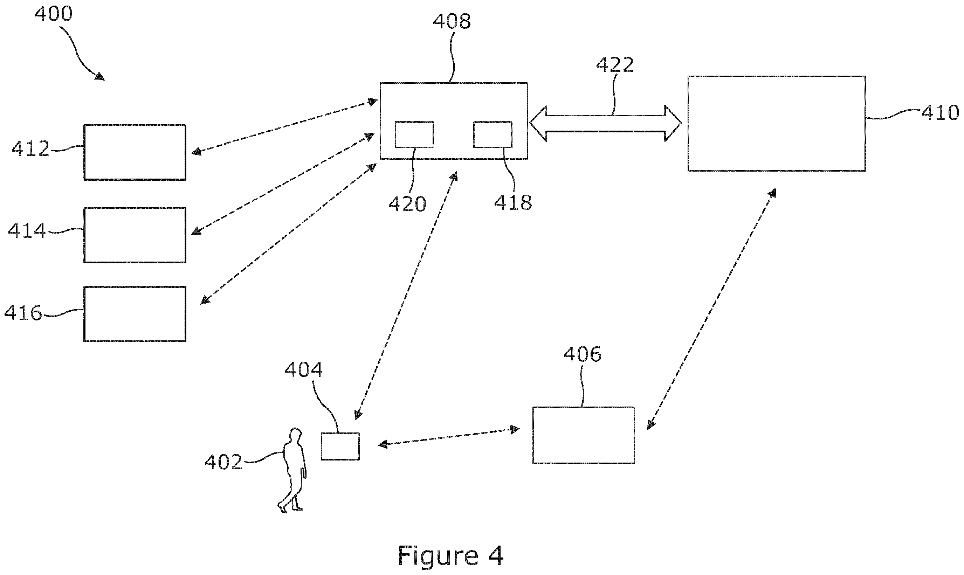

Figure 4 shows schematically relevant parts of a representative transaction processing system 400 suitable for implementing embodiments of the disclosure, and more specifically for processing a transaction request of a user 402. As will be explained in more detail, some aspects of this transaction processing system may correspond to entities described previously in relation to Figure 2.

The system 400 comprises a first (user payment) device 404 which is used by the user 402 to communicate with a second (merchant) payment processing device 406 in order to conduct a transaction interaction and generate a transaction request. With reference to the architecture described previously in relation to Figure 2, the user payment device 404 may correspond to the physical payment card 6, or to the smartphone 11 acting as a proxy for the payment card; and the payment processing device 406 may correspond to the POS terminal 7, or to an online gateway connected to the merchant server 12. The system 400 further comprises financial institution entities - an issuer system or server 408 and an acquirer system or server 410, configured to communicated with the user payment device 404 and the payment processing device 406 respective. The issuer 408 and acquirer 410 systems communicate with one another via a banking infrastructure 422, which performs the functions as set out in relation to the banking infrastructure 5 of Figure 2.

The system 400 further comprises one or more additional (second) user devices 412, 414, 416 associated with the user 402. The issuer 408 is also connected to and receives information from these user devices 412, 414, 416. It is to be understood that although Figure 4 illustrates the system with three such devices associated with the user 402, the system 400 may be implemented (and scaled up or down) with any number of devices associated with the user. Devices 412, 414, 416 are referred to as `additional' devices because, unlike the user payment device 404, they are not used by the user 402 to initiate the payment transaction request, but instead to communicate with the issuer 408, typically with user consent, to provide user-related information to the issuer 408. Specifically, devices 412, 414, 416 may be a smart home device installed in a home of the user 402, a car, a mobile device, CCTV cameras, or other smart device, which is connected to a network, and is associated with the user 402.

The skilled person will be familiar with smart devices (also referred to in the state of the art as 'Internet of Things' or loT devices), but in brief, smart devices are devices with sensors, processing ability, software and other technologies that connect and exchange data with other devices and systems over the Internet or other communications networks. Therefore, these devices may be, for example, but not limited to a Wi-Fi, a smart fridge, CCTV cameras with face recognition, smart heating system, smart speakers (e.g., Alexa, Google assistant, Siri), a car and various processing systems within the car such as the car media system.

As such, devices 412, 414, 416 may be configured to provide user state information to the issuer 408, and more particularly information that is related to, or derived from interaction of the user 402 with these devices, and which enables the issuer 408 to determine information about the state of the user 402. More specifically, the user state information provided by the user devices 412, 414, 416 may be used to estimate a location of the user 402, or another condition related to a state of the user (e.g., whether the user 402 is driving). This user state information is then assessed by the issuer 408, against at least one confidence criterion, in order to enable the issuer 408 to determine a level of confidence that the user 402 is legitimately associated with a given incoming transaction request. In view of the above, the issuer system 408 comprises at least one processor 418 and associated memory 420 which are configured to store and process the appropriate confidence criterion / criteria. Certain rules governing the processing of the confidence criterion / criteria may also be predefined and stored by the memory 420, and used by the processor 418.

In some examples, to determine the state of the user 402, the issuer 408 is configured to estimate a location of the user 402 at a time where the payment transaction request was received by the issuer 408, allowing the issuer 408 to confirm whether or not the user 402 is at a location different from the location where the payment transaction has taken place, for example, particularly in the case in which the transaction request is an in-store transaction. In other examples, to determine the state of the user 402, the issuer 408 is configured to use the user state information received from the devices 412, 414, 416 to confirm whether or not the user 402 is in a state that would prevent them from initiating a transaction, such as for example, driving a car.

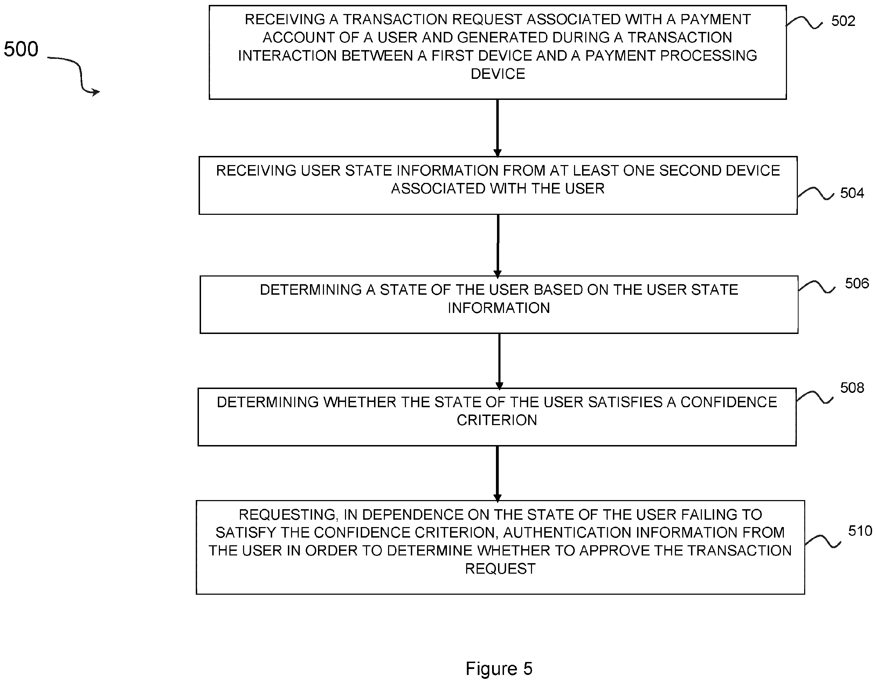

Figure 5 illustrates a general processing workflow for a method 500 implemented by the system 400 described above in order to process the transaction request of the user 402. Briefly, in a first step 502, the method 500 comprises receiving a payment transaction request associated with a payment account of the user 402. This step comprises the process described above in relation to steps 302 and 304 of method 300. In a next step 504, the method 500 comprises receiving user state information from one or more second devices associated with the user 402 - these may correspond to the additional user devices 412, 414, 416 described above in relation to Figure 4. In a subsequent step 506, the method 500 comprises determining a state of the user 402 based on the user state information, as described above in relation to the system 400. In a following step 508, the method 400 comprises determining whether the state of the user satisfies a confidence criterion; for example, based on the confidence criterion / criteria and using the predefined rules discussed above in relation to the system 400. Thereafter, the method 500 proceeds in step 510 with requesting, in dependence on the state of the user failing to satisfy the confidence criterion, (additional) authentication information from the user 402 in order to determine whether to approve the transaction request.

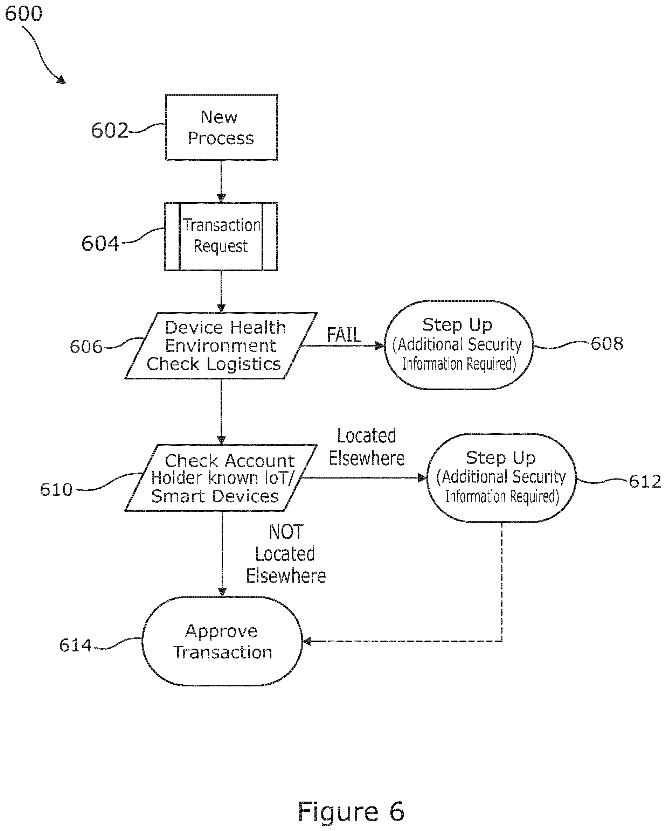

Figure 6 shows a flowchart illustrating specific details of a method 600 performed according to embodiments of the disclosure, expanding upon and based on the general method 500 outlined above with reference to Figure 5. The method 600 starts in step 602, where a transaction process is initiated between the user payment device 404 and the payment processing device 406. With reference to the method 300 previously described in relation to Figure 3, following the initiation of the transaction process in step 602, the method 600 carries out steps 604, 606 and 608 in substantially the same manner as steps 304, 306 and 308, respectively, as described above. Briefly, there steps include receiving (step 604) at the issuer 408, a transaction request from the payment processing device (e.g., a point of interaction terminal) 406; performing (step 606) device health and environment checks at the issuer 408; and based on the results of the checks performed in step 606 failing to fulfil the security requirements, the issuer 408 may step up the security checks to request security information to the user 402 (step 608) as described above in relation to Figure 3.

If the additional security information requested in step 608 fails the security checks made by the issuer 408, then the transaction request may be declined. However, if the additional security information requested in step 608 is approved by the issuer 408, then the method 600 proceeds to step 610. In this step, the issuer 408 will probe or query devices 412, 414, 416 to receive user state information and determine the state of the user 402. Here, the state of the user may correspond to an estimated location of the user 402 or to any other estimated condition of the user 402. In an alternative embodiment of the present disclosure, the method 600 may perform steps 606 and 610 in parallel to each other, or the method 600 may perform step 610 even if no additional security information is requested in step 608 (e.g., in the case that no 'step up' authentication is required). As an additional alternative embodiment of the method 600 according to the present disclosure, step 608 may be omitted, and the method may proceed from step 604 directly to step 610.

In step 610 of the method 600, the issuer 408 analyses the user state information provided by at least one of the second devices 412, 414, 416 and, based on that information, determines a state of the user 402. As described above, devices 412, 414, 416 may be different types of smart devices that are connected to a network and may provide information related to the interaction of the user 402 with these devices. A state of the user 402 may be an estimated location of the user, based on connectivity and/or timestamped information provided by at least one of the second devices 412, 414, 416.

For example, in the case where one of the devices 412, 414, 416 is a WiFi router, the device may provide information regarding whether the user 402 is connected to the network of the router (e.g., their home or work network), and optionally recent information related to when and for how long the user 402 was connected to said network. In another example where one of the devices 412, 414, 416 is a smart device installed in a particular location, such as a smart fridge, a smart heating system, smart speakers, or the like, the device may detect if the user 402 interacted with the device or if the device is detecting the presence of the user 402 (e.g., through the connection with a mobile device associated with the user 402). Via such detections, it may be established whether the user 402 was in proximity to the smart device, and therefore was at that particular location (e.g., at home, or at work); it may also be established when they were last detected in that particular location.

As another example, where one of the devices 412, 414, 416 is a car (or a device associated with or paired with the car), the information provided by the device may be related to user interactions with the car, such as when the user started a journey, whether the user 402 was driving, and how long the journey was. With such examples of user state information, the issuer 408 may be able to estimate, with a level of confidence, if the user 402 could be in the location associated with the transaction request. In such examples, the information provided by the devices 412, 414, 416 may also be used to determine user state information such as if the user is 'driving a car' or 'in transit' between locations. With such examples of user state information, the issuer 408 may be able to estimate, with a level of confidence, if the user 402 could be in a certain state that is conducive to having submitted the transaction request.

Once the issuer 408 determines the state of the user 402, it determines whether the state of the user satisfies a confidence criterion (or criteria), as noted in relation to step 508 of Figure 5. The confidence criterion / criteria may comprise a threshold distance between the estimated location of the user 402, as determined from the user state information provided by at least one of the devices 412, 414, 416, and a location associated with the transaction request (where if the threshold distance is exceeded, it is unlikely that the user would have submitted the transaction request). Additionally, or alternatively, the confidence criterion / criteria may relate to whether the user 402 is in a state that prevents them from being able to initiate a transaction process, such as for example the user 402 driving a car at the time the transaction request was made (which would make it unlikely that they also simultaneously submitted a transaction request). Additionally, or alternatively, the confidence criterion / criteria may comprise determining that the user information obtained from at least one of the devices 412, 414, 416 indicates that the user 402 is not in a location that corresponds to the location associated with the transaction request. It is to be understood that these examples are not limiting and that other confidence criteria may be used alone or in combination with the above confidence criteria, within the method 600.

Following step 610, at step 612, the issuer 408 may request, in dependence on the state of the user failing to satisfy the confidence criterion / criteria, (additional or further) authentication information from the user 402 in order to determine whether to approve the transaction request. In other words, based on the state of the user failing to meet the confidence criterion / criteria, the issuer 408 may determine a divergence between the information associated with the transaction request and the user state information obtained from at least one of the second devices 412, 414, 416. A step-up in the security checks performed (step 612) is then implemented, by requesting this additional authentication information from the user 402. This authentication information may comprise data associated with the user 402 and/or with the payment account that is required for approval of the transaction request. As described above in relation to step 608, the authentication information requested in step 612 may be a password, PIN, the use of face recognition systems or fingerprint identification of the user 402, which would typically have not been presented in any of the previous steps of the method 600.

In dependence on the state of the user satisfying the confidence criterion / criteria, the method 600 proceeds to step 614 where the issuer 408 approves the transaction. Furthermore, if it is determined in step 612 that the additional authentication information is sufficient to allow the issuer 408 to verify the genuine nature of the transaction request, then the issuer 408 may also subsequently approve the transaction in step 614. Considered another way, if it is determined, based on the user state information provided by the devices 412, 414, 416 that the user 402 is in a location or a state that is conducive to or corresponds to the submitting of a transaction request (e.g., as illustrated in Figure 6, the user is *not* `located elsewhere'), the issuer 408 can have confidence to approve the transaction. However, if it is determined that the user 402 is `located elsewhere', then the issuer 408 does not have the confidence to approve the transaction based on the information it has been provided thus far, and therefore needs to obtain additional authentication information to allow it to make the decision as to whether to approve the transaction.

As such, to summarise, methods described herein provide assurance that a user 402 associated with a payment account in relation to which a payment transaction is requested, is at a location, or state that allows them to initiate the transaction, such as by confirming that the user 402 is not located somewhere different from the location where the payment transaction is taken place, or that the user is not in a condition (or state) that would prevent them from initiating a transaction request.

Although methods 500, 600 and the system 400 described herein receive information from one or more devices 412, 414, 416 when a payment transaction request is received, it is to be understood that devices 412, 414, 416 may alternatively be sending user state information to the issuer 408 at predefined time intervals. This user information may then be stored at the issuer 408 (either at a local server or a cloud server), enabling the issuer 408 to use the information when a transaction request associated with the user 402 is received. This may be used to reduce possible latency issued that may arise when processing the payment transaction request, in order to provide a seamless experience to the user 402.

In addition, and anticipating the implementation of ultra-high speed network connectivity, devices 412, 414, 416 may be implemented to provide user information to the issuer 408 in real-time, when a transaction request is received at the issuer 408.

In alternative embodiments of the present disclosure, steps 506, 508 and 510 of the method 500 may be performed using machine learning algorithms to process the user state information and determine a state of the user 402. In addition, machine learning algorithms may be used to determine, based on the determined state of the user 402, whether the user 402 is somewhere other than in the location where the transaction associated with the transaction request is taken place, or whether the user 402 is in a state that would prevent them from initiating the transaction request.

In addition, machine learning algorithms may decide whether any discrepancies in the state of the user 402 determined by the issuer 408 and the information provided by the transaction request is enough to trigger the step-up security verification. Since the machine learning algorithm will learn as time goes on, the machine learning algorithm may be able to make decisions and adjustments to the requests of authentication information from the user 402 based on the user's usual purchasing behaviour.

Although methods 500 and 600 described herein describe a step-up in security verification as a binary request for additional authentication information, it is to be understood that the methods may be implemented by providing a gradient of step-up in the security verification depending on the discrepancies determined between the state of the user determined by the issuer 408 and the confidence criterion / criteria. As such, the response of the methods 500 and 600 may be a scale depending on the user state information provided by the devices 412, 414, 416 and whether that user state information is consistent throughout the different devices providing user state information. For example, different types of authentication information may be requested depending on the level of discrepancy that is determined between the state of the user determined by the issuer 408 and the confidence criterion / criteria. This enables the methods 500 and 600 described herein may be adjusted based on different levels of security determined from the user state information obtained. As such, the implementation of methods 500 and 600 described herein generally allows for an increase in granularity of the authentication information requested from the user 402 in the process of approval of a transaction request, with the methods 500 and 600 also functioning as a detection mechanism for fraudulent transactions (both for the issuer 408 and the user 402).

Exemplary implementations of the present disclosure, as described above in relation to the methods 500, 600 and to the system 400 will be described below. It is to be understood that these are provided to illustrate possible implementations of the methods 500 and 600 described herein, and are therefore not intended to limit the scope of the disclosure.

In a first example, an in-store transaction process may be initiated between a user payment device 404 and a payment processing device 406, which sends a transaction request to the issuer 408. The issuer 408 then may perform initial validation checks and may then proceed to probe one or more devices 412, 414, 416 associated with the user 402 to receive user state information. Here the one or more devices may be connected to the user's home WiFi network, such as, for example mobile phone, work computer, the heating system. These devices may provide user state information, which may comprise an indication that the user 402 is connected to the local network, or the user's car is detected as being parked in the carport / garage / driveway, etc. Accordingly, the issuer 408, from the user state information received, may determine a state of the user, such as that the user is at home, if the user state information indicates that the user 402 is connected to their home network, or if the user's car is detected as being parked in their carport / garage / driveway. As such, the issuer 408 may determine, with high confidence that the user 402 is not at the store where the transaction took place, and therefore the issuer 408 may require a step-up security check before approving the payment transaction request, such as requesting input of additional authentication information from the user 402 in order to determine whether to approve the transaction request. Alternatively, upon determining that the user 402 is not at the store where the transaction took place, the issuer may reject the transaction without requiring a step-up security check.

In an alternative scenario of the above example, the user state information provided by at least one of the devices 412, 414, 416 may instead confirm that the user 402 is not at home (the user 402 is not connected to their home network), the user 402 is not in their car, and in addition, no other user state information may provide confirmation that the user 402 is elsewhere. Therefore, the issuer 408 may determine, with a high confidence, that the state of the user is that the user 402 is located at the store, since the user's payment device 404 was presented at the store, and the user state information received does not indicate that the user 402 is `located elsewhere'. Accordingly, in this example the issuer 408 may then proceed to approve the transaction request without requiring further authentication information from the user 402.

In another example, the issuer 408 may receive an online transaction request associated with the user 402. After performing initial validation checks, the issuer 408 may proceed to probe at least one (second) device 412, 414, 416 associated with the user 402. In this example, the user state information provided by the devices associated with the user 402 may indicate that the user 402 is in their car, and they are currently driving. This information may be provided by the user's car and confirmed by the user's mobile device that may be connected to the car's media system, for example. Accordingly, the issuer 408 may then determine that the state of the user is 'in transit' or 'driving', and therefore, the issuer 408 may have high confidence that the user 402 is unlikely to have initiated the online transaction request. The issuer 408 may then request authentication information from the user 402, before approving the transaction. It is noted that in such an example, it is possible for the transaction to be one that is genuinely desired by the user 402 (for example, a passenger of the car is carrying out an approved transaction on the user's behalf 402). In such a case, the request for authentication information from the user 402 would not prevent the transaction being approved, as the user 402 would still be able to provide the desired authentication information.

As a further example, the issuer 408 may receive an in-store transaction request initiated between a user payment device 404 and a payment processing device 406, where the transaction is associated with a drive-through store. The issuer 408 may, after performing initial validation checks, proceed to probe at least one (second) device associated with the user 402, such as the devices 412, 414, 416. The devices may provide user state information to the issuer 408 confirming that the user 402 is in the car. In addition, the issuer 408 may receive additional user state information from devices such as the user's WiFi network, confirming that there are no mobile devices associated with the user 402 which are connected to their home WiFi. As such, the issuer 408 may determine, with high confidence, that the state of the user is in the car and at the drive-through store, and therefore that the user 402 has in fact initiated the transaction request. In this case, the issuer 408 may not require additional authentication information from the user 402 to approve the transaction.

As will be appreciated, as users incorporate increasingly more smart devices that may be associated with them and that may be connected to an issuer, these devices will contribute to provide progressively more accurate and reliable results.

There is also provided a computer program product comprising a computer readable medium, the computer readable medium having computer readable code embodied therein, the computer readable code being configured such that, on execution by a suitable computer or processor, the computer or processor is caused to perform the method or methods 500 and 600 described herein.

Thus, it will be appreciated that the disclosure also applies to computer programs, particularly computer programs on or in a carrier, adapted to put embodiments into practice. A program may be in the form of a source code, an object code, a code intermediate source and an object code such as in a partially compiled form, or in any other form suitable for use in the implementation of the method according to the embodiments described herein.

It will also be appreciated that such a program may have many different architectural designs. For example, a program code implementing the functionality of the method or system may be sub-divided into one or more sub-routines. Many different ways of distributing the functionality among these sub-routines will be apparent to the skilled person.

The sub-routines may be stored together in one executable file to form a self-contained program. Such an executable file may comprise computer-executable instructions, for example, processor instructions and/or interpreter instructions (e.g. Java interpreter instructions). Alternatively, one or more or all of the sub-routines may be stored in at least one external library file and linked with a main program either statically or dynamically, e.g. at runtime. The main program contains at least one call to at least one of the sub-routines. The subroutines may also comprise function calls to each other.

The carrier of a computer program may be any entity or device capable of carrying the program. For example, the carrier may include a data storage, such as a ROM, for example, a CD ROM or a semiconductor ROM, or a magnetic recording medium, for example, a hard disk. Furthermore, the carrier may be a transmissible carrier such as an electric or optical signal, which may be conveyed via electric or optical cable or by radio or other means. When the program is embodied in such a signal, the carrier may be constituted by such a cable or other device or means. Alternatively, the carrier may be an integrated circuit in which the program is embedded, the integrated circuit being adapted to perform, or used in the performance of, the relevant method.

Variations to the disclosed embodiments can be understood and effected by those skilled in the art in practicing the claimed disclosure, from a study of the drawings, the disclosure and the appended claims. In the claims, the word "comprising" does not exclude other elements or steps, and the indefinite article "a" or "an" does not exclude a plurality. A single processor or other unit may fulfil the functions of several items recited in the claims. Alternatively, more than one processor or other unit may jointly perform aspects of a single function recited in the claims.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner. Any reference signs in the claims should not be construed as limiting the scope.

## Claims

1. A computer implemented method for processing a transaction interaction between a first device and a payment processing device, the method being implemented by a remote server and comprising:
receiving a transaction request associated with a payment account of a user and generated during the transaction interaction;
receiving user state information from at least one second device associated with the user;
determining a state of the user based on the user state information;
determining whether the state of the user satisfies a confidence criterion; and
requesting, in dependence on the state of the user failing to satisfy the confidence criterion, authentication information from the user in order to determine whether to approve the transaction request.

2. The method of claim 1, wherein the confidence criterion is indicative of the user being in a location and/or condition, such that there is a sufficiently high likelihood of the user being involved in the transaction interaction.

3. The method of claim 1 or claim 2, wherein the user state information comprises one or more of the following: a geographical location of the at least one second device, network connection information of the at least one second device, data related to user interaction with the at least one second device.

4. The method of any preceding claim, wherein the user state information comprises a location of a network connection for the at least one second device, and wherein the state of the user corresponds to an estimated location of the user for the at least one second device.

5. The method of claim 4, wherein the transaction request comprises a location associated with the transaction request, and wherein the confidence criterion comprises a threshold value of a distance between the location associated with the transaction request and the estimated location of the user.

6. The method of any preceding claim, wherein requesting the authentication information comprises requesting the user to provide additional data associated with at least one of the payment account and the user.

7. The method of any preceding claim, wherein the at least one second device comprises one or more of the following: a mobile phone, a car, a handheld device, a controller, or a voice-activated device

8. The method of any preceding claim, wherein the method further comprises a machine learning module, wherein the machine learning module is configured to implement a method comprising:
analysing the user state information associated with the transaction request and previous user state information associated with previous transaction requests;
estimating a user behaviour based on the user state information and the previous user state information;
sending user confirmation request based on the determined user behaviour satisfy the confidence criterion.

9. A system for processing a transaction interaction between a first device and a payment processing device, the system comprising one or more processors collectively configured to:
receive a transaction request associated with a payment account of a user and generated during the transaction interaction;
receive user state information from at least one second device associated with the user;
determine a state of the user based on the user state information;
determine whether the state of the user satisfies a confidence criterion; and
request, in dependence on the state of the user failing to satisfy the confidence criterion, authentication information from the user in order to determine whether to approve the transaction request.

10. The system of claim 9, wherein the confidence criterion is indicative of the user being in a location and/or condition, such that there is a sufficiently high likelihood of the user being involved in the transaction interaction.

11. The system of claim 9 or claim 10, wherein the user state information comprises one or more of the following: a geographical location of the at least one second device, network connection information of at least one second device, data related to user interaction with at least one second device.

12. The system of any of claims 9 to 11, wherein the user state information comprises a location of a network connection for the at least one second device, and wherein the state of the user corresponds to an estimated location of the user for the at least one second device.

13. The system of claim 12, wherein the transaction request comprises a location associated with the transaction request, and wherein the confidence criterion comprises a threshold value of a distance between the location associated with the transaction request and the estimated location of the user.

14. The system of any of claims 9 to 13, wherein requesting the authentication information comprises requesting the user to provide additional data associated with at least one of the payment account and the user.

15. A computer readable medium and a processor, the computer readable medium having a computer readable code embodied therein, the computer readable code being configured such that, when executed by the processor is adapted to implement the method of any of claims 1 to 8.
